# EUROPÄISCHE PATENTANMELDUNG

(11) **EP 3 650 662 A1**
(43) Veröffentlichungstag der Anmeldung: **13.05.2020**
(21) Anmeldenummer: 19208320.2
(22) Anmeldetag: 11.11.2019
(51) Int. Cl.: F01N 1/00, F01N 1/02, F01N 13/18

(54) **SCHALLDÄMPFER**

(30) Priorität: 12.11.2018 DE 102018128210
(71) Anmelder: Faurecia Emissions Control Technologies, Germany GmbH, 86154 Augsburg (DE)
(72) Erfinder: Jaworski, Jaroslaw, 86154 Augsburg (DE); Lungfiel, Andre, 86154 Augsburg (DE)
(74) Vertreter: Prinz & Partner mbB

(57) **Zusammenfassung**

Ein Schalldämpfer (10) einer Abgasanlage einer Verbrennungskraftmaschine, hat wenigstens ein abgasdurchströmtes Innenrohr (14) und einer Außenhülle (12; 112), die zumindest ein Mantelteil (16) aufweist, das das Innenrohr (14) zumindest teilweise umgibt und das durch zwei Bodenabschnitte axial begrenzt ist, wobei das zumindest eine Mantelteil (16) über zumindest eine Fixierung (22) direkt am Innenrohr (14) befestigt ist.

## Beschreibung

Die Erfindung betrifft einen Schalldämpfer einer Abgasanlage einer Verbrennungskraftmaschine.

Die Geräuschentwicklung eines Schalldämpfers, also der Schall, den ein Schalldämpfer in die Umgebung abstrahlt, insbesondere dessen Resonanzfrequenz, hängt unter anderem mit der Steifigkeit der Gesamtstruktur zusammen und lässt sich über diesen Parameter beeinflussen.

Aufgabe der Erfindung ist es, einen einfachen Weg bereitzustellen, die Steifigkeit eines Schalldämpfers zu erhöhen.

Diese Aufgabe wird mit einem Schalldämpfer mit den Merkmalen des Anspruchs 1 gelöst. Der Schalldämpfer einer Abgasanlage einer Verbrennungskraftmaschine weist wenigstens ein abgasdurchströmtes Innenrohr auf, sowie eine Außenhülle, die zumindest ein Mantelteil umfasst, das das Innenrohr zumindest teilweise umgibt, wobei das Mantelteil durch zwei Bodenabschnitte axial begrenzt ist und das zumindest eine Mantelteil über zumindest eine Fixierung direkt am Innenrohr befestigt ist. Über die direkte Fixierung des Mantelteils am Innenrohr kann unmittelbar die Steifigkeit des gesamten Schalldämpfers und damit dessen Geräuschentwicklung verändert werden, insbesondere hin zu einer höheren Resonanzfrequenz. Die Art, die Anzahl und die Position der Fixierungen, die das Mantelteil mit dem Innenrohr verbinden, stellen Parameter dar, durch deren Veränderung die Schallabstrahlung für den jeweiligen Einsatzzweck optimiert werden kann.

Das Mantelteil erstreckt sich beispielsweise in einer Längsrichtung L parallel zum Innenrohr oder zu einer Ebene, in der das Innenrohr verläuft.

Die Außenhülle schließt den Schalldämpfer gegenüber der Umgebung ab und bildet die äußerste Lage des Schalldämpfers. Weitere Zwischenlagen zwischen Innenrohr und Außenhülle sind im Normalfall nicht erforderlich. Die Außenhülle kann gegebenenfalls doppellagig sein.

Der gesamte Schalldämpfer kann eine äußerst flache Konstruktion von einer Höhe von z.B. nur etwa 60 bis 100 mm, insbesondere 80 mm, aufweisen, wobei die Höhe hauptsächlich durch den Durchmesser der einzelnen Innenrohre bestimmt ist.

Die Fixierung kann auf jede geeignete Art erfolgen und kann punktuell, linear entlang der Längserstreckung des jeweiligen Innenrohrs oder auch flächig ausgeführt sein.

Geeignete Methoden zur Herstellung der Fixierung sind beispielsweise Schweißen, Löten und/oder Klemmen. Andere Arten der Befestigung oder eine Kombination verschiedener Verfahren können auch zum Einsatz kommen.

Generell ist es möglich, mehrere, insbesondere parallel, nebeneinander angeordnete Innenrohre innerhalb der Außenhülle vorzusehen, wobei die Fixierung vorzugsweise zumindest an einem der innenliegenden Innenrohre erfolgt. Das Mantelteil kann an genau einem der Innenrohre oder auch an mehreren Innenrohren befestigt sein.

Um die Bauhöhe möglichst gering zu halten, sind vorzugsweise sämtliche Innenrohre des Schalldämpfers parallel zueinander oder zumindest ohne sich zu überkreuzen angeordnet.

Normalerweise sind zumindest zwei der Innenrohre aus der Außenhülle nach außen geführt und bilden einen Abgaseinlass sowie einen Abgasauslass, wobei der Schalldämpfer über den Abgaseinlass mit einem Abgassystem der Verbrennungskraftmaschine verbindbar ist und das Abgas nur durch den Abgasauslass die Abgasanlage in die Umgebung verlässt. Es können gegebenenfalls mehrere Abgaseinlässe und/oder Abgasauslässe vorgesehen sein. Wie herkömmlich bekannt können diese Innenrohre natürlich im Bereich ihres Durchtritts durch die Außenhülle zusätzlich an der Außenhülle befestigt sein, wobei diese Befestigungen räumlich von der Fixierung des Mantelteils am Innenrohr getrennt sind. Abgaseinlass und/oder Abgasauslass sind z.B. an den Bodenabschnitten angeordnet.

Die Verbrennungskraftmaschine kann ein Antriebsmotor eines Fahrzeugs sein, aber natürlich auch einen anderen Einsatzzweck wie beispielsweise in einem Schiff oder einem Kraftwerk haben.

Es ist möglich, zur weiteren Erhöhung der Steifigkeit wenigstens eine Zwischenwand im Inneren der Außenhülle anzuordnen, durch die sich das Innenrohr hindurch erstreckt. Die Zwischenwände sind an der Außenhülle befestigt. Durch die Zwischenwände können auch alle Innenrohre in der gewünschten Position im Inneren der Außenhülle gehalten werden. Beispielsweise sind zwei parallele Zwischenwände vorgesehen.

Es ist möglich, den Schalldämpfer im Wesentlichen aus dem Mantelteil, den Innenrohren und den Zwischenwänden zu gestalten.

Das Innenrohr kann zumindest im Bereich der Fixierung einen beliebigen Querschnitt aufweisen, der beispielweise kreisrund, oval, elliptisch oder polygonal, insbesondere quadratisch, rechteckig oder sechseckig gewählt sein kann.

In einer bevorzugten Ausführungsform ist das Mantelteil so gestaltet, dass es das Innenrohr entlang einer Umfangsrichtung vollständig umgibt, wobei die Fixierung auf einer Fläche des Mantelteils beabstandet von den Bodenabschnitten vorgesehen ist. Die Fläche des Mantelteils ist insbesondere eine Seite des Mantelteils, die sich über alle Innenrohre erstreckt und die bei einem quaderförmigen Schalldämpfer die Seitenfläche mit der größten Fläche darstellt.

Um den Kontakt zwischen Mantelteil und Innenrohr im Bereich der Fixierung zu verbessern, kann die Form des Mantelteils im Bereich der Fixierung an eine Außenkontur des Innenrohrs angepasst sein, sodass das Mantelteil im Bereich der Fixierung flächig am Innenrohr anliegt.

Es ist möglich, die Form des Mantelteils so zu wählen, dass dieses über die gesamte Längserstreckung des Innenrohrs an diesem anliegt. Es ist aber auch denkbar, dass außerhalb der Fixierungen das Mantelteil vom Innenrohr beabstandet ist.

Die Querschnittsform des Mantelteils in einem Querschnitt senkrecht zum Verlauf des Innenrohrs oder zur Längsrichtung des Mantelteils lässt sich im Ermessen des Fachmanns beliebig wählen. Möglich ist beispielsweise eine Quaderform, aber auch eine Form, in der das Mantelteil in einem mittleren Bereich aufgeweitet ist.

In einer weiteren bevorzugten Ausführungsform weist das Mantelteil zwei separate Teilschalen auf, die beidseits des Innenrohrs angeordnet sind und die jeweils zwei freie Längsränder aufweisen, über die die Teilschalen am Innenrohr befestigt sind, wobei die Fixierung entlang der kompletten Länge der Teilschalen und/oder des Innenrohrs ausgebildet ist. Bei diesem Design bildet das Innenrohr einen Teil der Außenhülle. Die Fixierung, insbesondere in Form einer Schweißnaht oder einer Lötverbindung, dichtet bei dieser Ausführungsform jeweils auch den Übergang vom Innenrohr zum Mantelteil ab, sodass auch hier das Innere der Außenhülle gasdicht gegenüber der Umgebung abgeschlossen ist und Abgas den Schalldämpfer nur durch den Abgasauslass verlässt.

Außerdem betrifft ist die Erfindung ein Fahrzeug mit einem oben beschriebenen Schalldämpfer.

Die Erfindung wird nachfolgend anhand mehrerer Ausführungsbeispiele und mit Bezug auf die beigefügten Figuren näher beschrieben. In den Zeichnungen zeigen:
- Figur 1 eine schematische Schnittansicht eines erfindungsgemäßen Schalldämpfers gemäß einer ersten Ausführungsform entlang der Linie I-I aus Figur 2;
- Figur 2 eine schematische Darstellung des Innenaufbaus des erfindungsgemäßen Schalldämpfers;
- Figur 3 eine schematische perspektivische Darstellung der Außenhülle des erfindungsgemäßen Schalldämpfers;
- Figur 4 eine Möglichkeit zur Anordnung der Fixierungen des Innenrohrs am Mantelteil bei einem erfindungsgemäßen Schalldämpfer;
- Figuren 5 bis 7 schematische Schnittansichten eines erfindungsgemäßen Schalldämpfers entlang einer Linie V - V aus Figur 2, wobei Innenrohre mit unterschiedlichen Querschnittsformen dargestellt sind;
- Figur 8 eine weitere schematische Schnittansicht eines erfindungsgemäßen Schalldämpfers; und
- Figur 9 eine schematische Schnittansicht eines erfindungsgemäßen Schalldämpfers gemäß einer zweiten Ausführungsform.

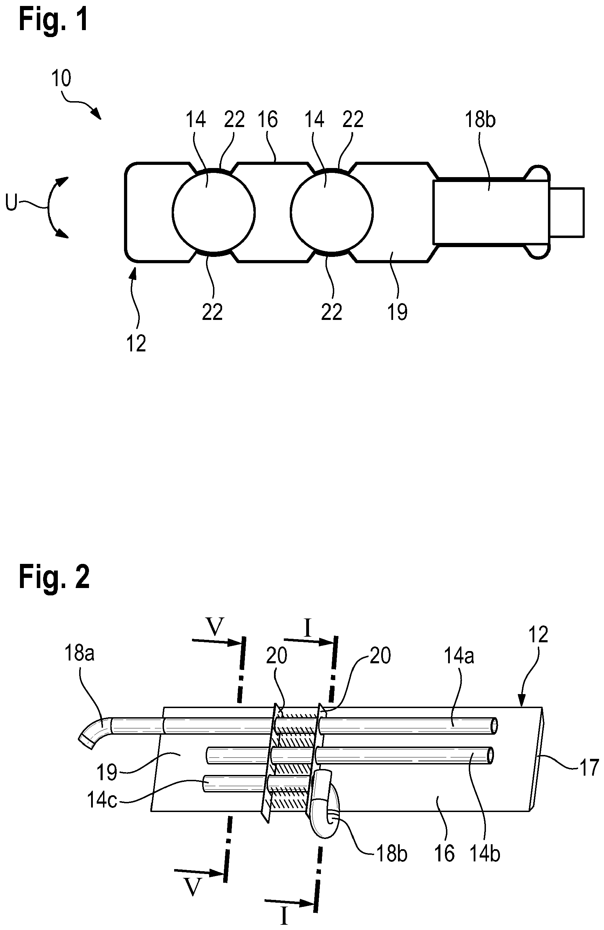

Figur 1 zeigt eine Schnittansicht eines erfindungsgemäßen Schalldämpfers 10 gemäß einer ersten Ausführungsform.

Die wesentlichen Bauteile des Schalldämpfers 10 sind eine Außenhülle 12 sowie eines oder mehrere Innenrohre 14, die innerhalb der Außenhülle 12 angeordnet sind.

Die Außenhülle 12 setzt sich in dieser Ausführungsform aus einem entlang der Umfangsrichtung U geschlossenen Mantelteil 16 sowie zwei das Mantelteil 16 axial begrenzenden Bodenabschnitten 17 zusammen. Die Bodenabschnitte 17 sind hier separate Bauteile, die mit den axialen, freien Rändern des Mantelteils 16 verbunden sind. Die Bodenabschnitte 17 könnten aber auch einstückig mit dem Mantelteil 16 an dessen axialen Rändern gebildet sein.

Dabei umgibt das Mantelteil 16 sämtliche Innenrohre 14 entlang der Umfangsrichtung U bezogen auf den in Figur 1 gezeigten Querschnitt quer zur Längserstreckung der Innenrohre 14 vollständig.

Das Mantelteil 16 ist hier aus einem einstückigen Blechabschnitt geformt, könnte aber auch aus mehreren Abschnitten, z.B. zwei Halbschalen, zusammengesetzt sein.

Figur 2 zeigt den Innenaufbau des Schalldämpfers 10. Hier ist zu erkennen, dass in diesem Beispiel insgesamt drei Innenrohre 14, im Folgenden auch als Innenrohre 14a, 14b, 14c bezeichnet, vorgesehen sind, die parallel zueinander angeordnet sind.

Das mittlere Innenrohr 14b ist hier an beiden Enden offen und liegt vollständig im Inneren der Außenhülle 12.

Die beiden außenliegenden Innenrohre 14a, 14c weisen hier jeweils ein offenes Ende auf, das in einem von der Außenhülle 12 umschlossenen Innenraum 19 liegt. Das zweite Ende des Innenrohrs 14a sowie das zweite Ende des Innenrohrs 14c sind hingegen aus der Außenhülle 12 herausgeführt und bilden einen Abgasauslass 18a und einen Abgaseinlass 18b. Über den Abgaseinlass 18b ist der Schalldämpfer 10 mit einer Abgasanlage einer Verbrennungskraftmaschine (nicht näher dargestellt) verbindbar. Über den Abgasauslass 18a entweicht das Abgas, das den Schalldämpfer 10 passiert hat, in die Umgebung.

Das Mantelteil 16 bildet die äußerste Lage des Schalldämpfers 10 und schließt hier den von der Außenhülle 12 umgebenen Innenraum 19 direkt gegenüber der Umgebung ab. Die Außenhülle 12 ist, wie bekannt, zumindest im Wesentlichen gasdicht, sodass Abgas den Schalldämpfer 10 nur über den Abgasauslass 18a verlässt.

Im Inneren der Außenhülle 12 sind hier neben den Innenrohren 14 auch noch zwei Zwischenwände 20 vorgesehen (siehe Figur 2), die sich quer zu den Innenrohren 14 erstrecken und durch die in diesem Beispiel sämtliche der Innenrohre 14 hindurch verlaufen.

Wenigstens eines der Innenrohre 14 ist direkt und permanent am Mantelteil 16 befestigt. Die hierzu vorgesehene Fixierung 22 kann auf jede geeignete Weise erzeugt werden und erfolgt beispielsweise durch Punktschweißen, Schweißen, Löten und/oder Klemmen. Die Fixierung 22 kann lediglich punktuell ausgeführt sein, oder über eine größere Strecke linear entlang der Längsrichtung des Innenrohrs 14 verlaufen. Auch eine flächige Fixierung 22 ist denkbar.

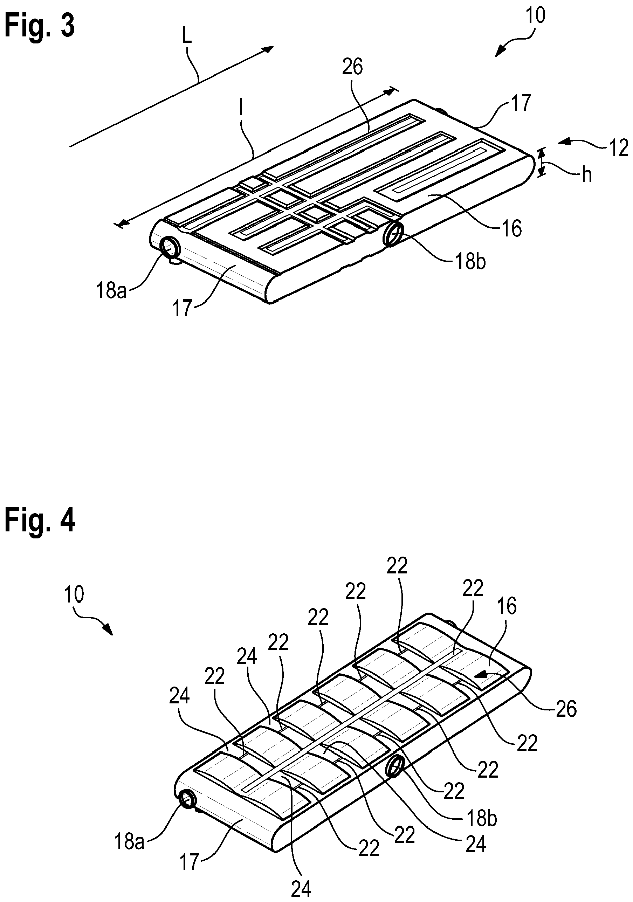

Figur 4 zeigt ein Beispiel dafür, wie die Innenrohre 14 mit dem Mantelteil 16 verbunden sein können. Hier sind punktuelle Fixierungen 22 zur Verbindung der beiden außen liegenden Innenrohre 14a, 14c mit dem Mantelteil 16 gewählt, während das mittige Innenrohr 14b entlang seiner gesamten Längserstreckung mit dem Mantelteil 16 verbunden ist.

Wie Figur 4 zeigt, sind auch die beiden Zwischenwände 20 mittels punktueller Fixierungen 24 fest mit dem Mantelteil 16 verbunden.

Alle Fixierungen 22 sind hier auf einer Fläche des Mantelteils 16 vorgesehen, die sich über alle Innenrohre 14 erstreckt, also auf den Seiten 26 mit der größten Fläche der in etwa quaderförmigen Außenhülle 12.

In diesem Beispiel sind Fixierungen 22 auf beiden Seiten der Innenrohre 14 vorgesehen, die insbesondere in Draufsicht auf die Seite 26 gegenüberliegend angeordnet sind. Eine andere Anordnung der Fixierungen 22 ist natürlich auch denkbar.

Bei dem in Figur 1 gezeigten Beispiel ist das Mantelteil 16 im Bereich der Fixierungen 22 in seiner Form an die Außenkontur des jeweiligen Innenrohrs 14 angepasst. Das Mantelteil 16 liegt daher im Bereich der Fixierung 22 flächig am Innenrohr 14 an, was das das Fixieren erleichtert.

Es wäre auch möglich, die Fixierung 22 nur über die Klemmwirkung zwischen dem Mantelteil 16 und dem jeweiligen Innenrohr 14 zu erzeugen, in dem eine geeignete Formgebung das Mantelteils 16 und/oder des Innenrohrs 14 im Bereich der Fixierung 22 gewählt wird.

Zwischen den Fixierungen 22 könnte gegebenenfalls das Mantelteil 16 von den Innenrohren 14 beabstandet sein.

Die Anzahl, Art und Abmessungen der Fixierungen 22 können vom Fachmann für den jeweiligen Einzelfall ausgewählt werden, um die gewünschte Steifigkeit des Schalldämpfers 10, insbesondere die gewünschte Resonanzfrequenz, auf den jeweiligen Anwendungsfall abzustimmen. Eine Kombination unterschiedlicher Arten der Fixierung ist ebenfalls denkbar.

Fläche und Form eines Querschnitts der Innenrohre 14 sind nach Belieben wählbar.

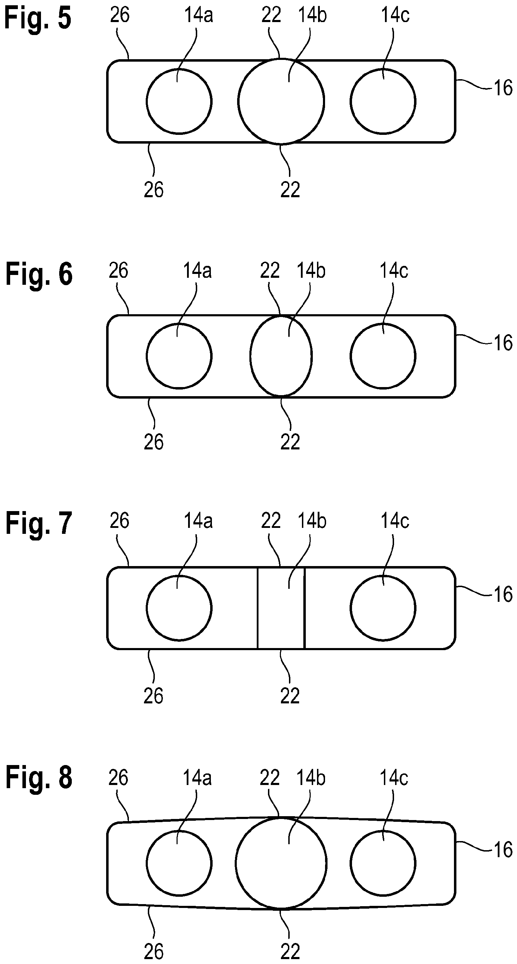

Figuren 5 bis 7 zeigen verschiedene Beispiele, wobei jeweils das mittlere Innenrohr 14b einen kreisrunden (Figur 5), ovalen oder elliptischen (Figur 6) oder polygonalen, hier rechteckigen (Figur 7) Querschnitt aufweist. Die beiden äußeren Innenrohre 14a, 14c sind hier jeweils mit kreisrunden Querschnitt dargestellt, natürlich könnten auch diese Innenrohre 14a, 14c einen beliebigen geeigneten Querschnitt aufweisen.

Die Figuren 5 bis 7 verdeutlichen auch, dass die Querschnittsfläche der einzelnen Innenrohre 14a, 14b, 14c unterschiedlich gewählt sein kann. Natürlich könnten auch sämtliche Innenrohre 14 dieselbe Querschnittsform und/oder dieselbe Querschnittsfläche aufweisen.

Auch ein Querschnitt des Mantelteils 16 quer zu Längsrichtung L der Innenrohre 14 kann nach Belieben im Ermessen des Fachmanns gewählt werden.

Figur 3 zeigt beispielsweise eine Außenhülle 12 mit einem im Wesentlichen rechteckigen Querschnitt, wobei der gesamte Schalldämpfer 10 im Wesentlichen quaderförmig gestaltet ist und eine Höhe h nur unwesentlich größer als der Durchmesser der Innenrohre 14 ist.

Figur 8 zeigt einen Schalldämpfer 10 mit einem Mantelteil 16, das im mittleren Bereich des Querschnitts aufgeweitet oder ausgewölbt ist. Auch sämtliche anderen geeigneten Querschnittsformen sind denkbar, wobei generell eine möglichst geringe Höhe h, also ein besonders flacher Schalldämpfer 10, zu bevorzugen sin wird.

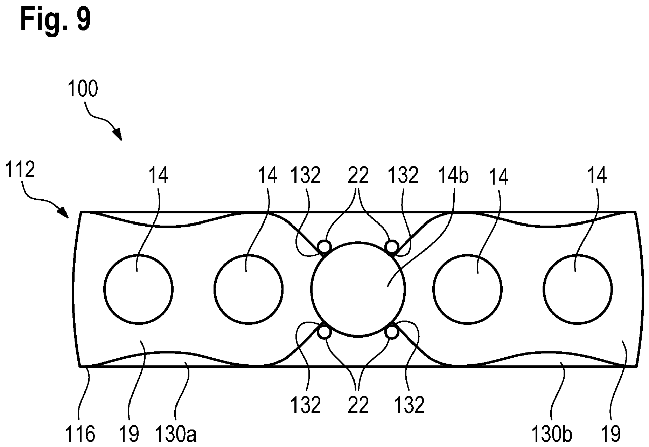

Figur 9 zeigt eine zweite Ausführungsform eines Schalldämpfers 100.

Im Gegensatz zur ersten Ausführungsform umgibt das Mantelteil 116 entlang der Umfangsrichtung U nicht sämtliche Innenrohre 14 vollständig. In diesem Beispiel ist das Mantelteil 116 durch zwei separaten Teilschalen 130a, 130b gebildet. Jede der Teilschalen 130a, 130b ist seitlich eines mittleren Innenrohrs 14b angeordnet und erstreckt sich über die gesamte Länge I des Schalldämpfers 100 oder über die gesamte Länge des Innenrohrs 14b. Innerhalb eines von der jeweiligen Teilschale 130a, 130b umschlossenen Innenraums 19 können nach Belieben weitere Innenrohre 14 angeordnet sein.

Die beiden Teilschalen 130a, 130b sind spiegelbildlich zueinander aufgebaut. Jede der Teilschalen 130a, 130b weist zwei freie Längsränder 132 auf, die am Außenumfang des Innenrohrs 14b anliegen und dort jeweils über eine Fixierung 22, die über die gesamte Länge des Innenrohrs 14b verläuft, mit diesem fest und gasdicht verbunden sind.

In diesem Beispiel bildet also die Außenwand des Innenrohrs 14b einen Teil der Außenhülle 112 des Schalldämpfers 100.

Gegebenenfalls sind einzelne Kontaktstellen zwischen den Teilschalen 130a, 130b vorgesehen, und auch die (hier nicht dargestellten) Bodenabschnitte verbinden die beiden Teilschalen 130a, 130b.

Natürlich wäre es auch möglich, Merkmale der beiden beschriebenen Ausführungsformen miteinander zu kombinieren und beispielsweise beim Schalldämpfer 100 das Mantelteil 116 wie in der ersten Ausführungsform an einem oder mehreren der weiteren Innenrohre 14 zusätzlich zu fixieren.

## Patentansprüche

1. Schalldämpfer (10; 100) einer Abgasanlage einer Verbrennungskraftmaschine, mit wenigstens einem abgasdurchströmten Innenrohr (14, 14a, 14b, 14c) und einer Außenhülle (12; 112), die zumindest ein Mantelteil (16; 116) aufweist, das das Innenrohr (14, 14a, 14b, 14c) zumindest teilweise umgibt und das durch zwei Bodenabschnitte (17) axial begrenzt ist, wobei das zumindest eine Mantelteil (16; 116) über zumindest eine Fixierung (22) direkt am Innenrohr (14, 14a, 14b, 14c) befestigt ist.

2. Schalldämpfer (10; 100) nach Anspruch 1, **dadurch gekennzeichnet, dass** die Fixierung (22) durch Schweißen, Löten und/oder Klemmen erfolgt.

3. Schalldämpfer (10; 100) nach einem der vorhergehenden Ansprüche, **dadurch gekennzeichnet, dass** mehrere nebeneinander, insbesondere parallel nebeneinander angeordnete Innenrohre (14, 14a, 14b, 14c) vorgesehen sind, und die Fixierung (22) zumindest an einem der innen liegenden Innenrohre (14, 14a, 14b, 14c) erfolgt.

4. Schalldämpfer (10; 100) nach einem der vorhergehenden Ansprüche, **dadurch gekennzeichnet, dass** zumindest zwei der Innenrohre (14, 14a, 14b, 14c) aus der Außenhülle (12; 112) nach außen geführt sind und einen Abgaseinlass (18b) sowie einen Abgasauslass (18a) bilden.

5. Schalldämpfer (10; 100) nach einem der vorhergehenden Ansprüche, **dadurch gekennzeichnet, dass** wenigstens eine Zwischenwand (20) im Inneren der Außenhülle (12; 112) angeordnet ist, durch die sich das Innenrohr (14, 14a, 14b, 14c) hindurch erstreckt.

6. Schalldämpfer (10; 100) nach einem der vorhergehenden Ansprüche, **dadurch gekennzeichnet, dass** das Innenrohr (14, 14a, 14b, 14c) zumindest im Bereich der Fixierung (22) einen kreisrunden, ovalen oder polygonalen Querschnitt aufweist.

7. Schalldämpfer (10; 100) nach einem der vorhergehenden Ansprüche, **dadurch gekennzeichnet, dass** das Mantelteil (16) das Innenrohr (14, 14a, 14b, 14c) entlang einer Umfangsrichtung (U) vollständig umgibt und die Fixierung (22) auf einer Fläche das Mantelteils (16) vorgesehen ist.

8. Schalldämpfer (10; 100) nach einem der vorhergehenden Ansprüche, **dadurch gekennzeichnet, dass** die Form des Mantelteils (16) im Bereich der Fixierung (22) an eine Außenkontur des Innenrohrs (14, 14a, 14b, 14c) angepasst ist, sodass das Mantelteil (16) im Bereich der Fixierung (22) flächig am Innenrohr (14, 14a, 14b, 14c) anliegt.

9. Schalldämpfer (10; 100) nach einem der vorhergehenden Ansprüche, **dadurch gekennzeichnet, dass** das Mantelteil (16) in einem Querschnitt senkrecht zum Verlauf des Innenrohrs (14, 14a, 14b, 14c) in einem mittleren Bereich aufgeweitet ist.

10. Schalldämpfer (10; 100) nach einem der Ansprüche 1 bis 6, **dadurch gekennzeichnet, dass** das Mantelteil (116) zwei separate Teilschalen (130a, 130b) aufweist, die beidseits des Innenrohrs (14, 14a, 14b, 14c) angeordnet sind und die jeweils zwei freie Längsränder (132) aufweisen, über die die Teilschalen (130a, 130b) am Innenrohr (14, 14a, 14b, 14c) befestigt sind, wobei die Fixierung (22) entlang der kompletten Länge (I) der Teilschalen (130a, 130b) und/oder des Innenrohrs (14, 14a, 14b, 14c) ausgebildet ist.

11. Fahrzeug mit einem Schalldämpfer (10) nach einem der vorhergehenden Ansprüche.
